# EUROPEAN PATENT SPECIFICATION

(11) **EP 1 265 820 B1**
(45) Date of publication and mention of the grant of the patent: **05.01.2005**
(21) Application number: 01911990.8
(22) Date of filing: 20.03.2001
(51) Int. Cl.: C03C 4/04, C03C 13/04, C03C 3/06

(54) **OPTICAL WAVEGUIDES AND DEVICES INCLUDING SAME**
OPTISCHE WELLENLEITER UND DIESE ENTHALTENDE VORRICHTUNGEN
GUIDES D'ONDES OPTIQUES ET DISPOSITIFS INCORPORANT LESDITS GUIDES D'ONDES

(30) Priority: 23.03.2000 EP 00302381; 10.04.2000 US 195305 P
(43) Date of publication of application: 18.12.2002
(73) Proprietor: UNIVERSITY OF SOUTHAMPTON, Southampton, Hampshire SO17 1BJ (GB)
(72) Inventor: BRAMBILLA, Gilberto University of Southampton, Southampton Hampshire SO17 1BJ (GB); PRUNERI, Valerio University of Southampton, Southampton Hampshire SO17 1BJ (GB); REEKIE, Laurence University of Southampton, Southampton Hampshire SO17 1BJ (GB)
(74) Representative: Haines, Miles John
(86) International application number: PCT/GB2001/001218
(87) International publication number: WO 2001/070640

(56) References cited:
- WO-A-96/34304
- US-A- 6 009 222
- BRAMBILLA G ET AL: "Photorefractive index gratings in SnO/sub 2/:SiO/sub 2/ optical fibers" APPLIED PHYSICS LETTERS, 14 FEB. 2000, AIP, USA, vol. 76, no. 7, pages 807-809, XP002145427 ISSN: 0003-6951 cited in the application
- DATABASE WPI Section Ch, Week 199614 Derwent Publications Ltd., London, GB; Class G06, AN 1996-135983 XP002145428 & JP 08 026767 A (NIPPON GARASU KK), 30 January 1996 (1996-01-30) cited in the application

## Description

### BACKGROUND OF THE INVENTION

The invention relates to optical waveguides comprising photosensitive glass, and to optical waveguide devices containing such glass, such as optical fibre gratings, optical fibre dispersion compensators, optical fibre sensors, optical fibre lasers and planar waveguide devices.

Photosensitivity of glass materials (i.e. change in refractive index by exposure to optical radiation) is a fundamental property for the realisation of many optical devices. Typical glasses used for these applications are photosensitive to ultraviolet (UV) light. For example, Bragg gratings in optical fibres and planar waveguides have attracted much attention since their first demonstration. Bragg gratings are obtained by exposure of a waveguide made of photosensitive glass to a periodic light pattern. Such devices have many applications, such as sensors, dispersion compensators and laser mirrors.

The definition of channel waveguides using UV writing on glass substrates, such as silica on silicon, is also becoming increasingly important for the realisation of multifunctional integrated optical components.

Telecommunications optical fibres, i.e. SiO₂ fibres with a low content of GeO₂ (∼3%), show only relatively small refractive index changes when exposed to UV radiation. In addition, the UV photoinduced index change in standard germanosilicate waveguides is not sufficient for writing complex structures with a high degree of integration. With known photosensitive glasses, it is thus necessary to increase the photosensitivity of optical fibres or planar waveguides through post-fabrication methods and co-doping. Typical post-fabrication methods are hydrogen/deuterium loading and flame brushing. Typical co-dopants are B₂O₃, SnO₂ and rare earth elements. SnO₂ is used mainly as a codopant in germanosilicate, phosphosilicate and aluminosilicate glasses [see references 1,2,3,4]. Optical fibre with numerical apertures (NA) between 0.23 and 0.29 and refractive index modulations of ∼10⁻³ can be produced in this way.

Recently, optical fibres made from SnO₂:SiO₂ have been investigated [5]. Tin doped glass is also mentioned by other workers [6-8]). In reference [5], it has been shown that small concentrations (∼0.15 mol %) of SnO₂ in a silica network give permanent refractive index changes with a high degree of photorefractivity. Under similar UV irradiation conditions, the degree of photorefractivity is nearly two orders of magnitude higher than the concentrations of GeO₂ required in SiO₂:GeO₂ fibres.

Compared to the above-mentioned post-fabrication and co-doping techniques, the use of SnO₂ has several potential attractions. It should keep the absorption low in the third telecom window at 1.5 µm. Processing is potentially less time consuming and potentially cheaper.

However, in practice, preparation of SnO₂:SiO₂ glasses is limited by the low solubility of Sn which crystallises out of SnO₂ at concentrations greater than about 1 mol %. Inclusion of SnO₂ at higher concentration leads to a crystalline material which is not viable for realisation of devices with low optical loss. Although non-crystalline photosensitive silica glass with SnO₂ concentrations of close to 1 mol% could potentially lead to the production of practical devices, the 1% solubility limit represents a major practical limitation, which limits the amount of photosensitivity (refractive index modulation) and the control of NA.

Another problem with the production of SnO₂ doped or co-doped fibre via modified chemical vapour deposition (MCVD) or solution doping techniques is related to the high volatility of SnO₂ at the temperature required for preform collapse. This problem effectively prevents high SnO₂ concentrations being incorporated into a fibre. An analogous problem can be expected to arise for other glass preparation processes.

It is therefore an aim of the invention to provide a photosensitive glass for fabricating fibre-optic and planar waveguides that allows tin oxide to be incorporated in a silica matrix at concentrations above its normal solubility limit of 1 mol%, and also that reduces the effects of high volatility during preform collapse or other glass preparation process.

### SUMMARY OF THE INVENTION

It has been discovered that inclusion of a Group I element such as sodium in a tin-doped silica glass matrix provides a glass with highly desirable properties for use in waveguides, either made from optical fibres with the glass forming the core, or as part of a planar waveguide structure.

Accordingly, the invention provides an optical waveguide having a waveguiding channel of photosensitive silica glass with a modified refractive index optically written therein, characterised in that the photosensitive glass comprises oxides of silicon, tin and at least one of sodium, lithium or potassium. The optical waveguide may be an optical fibre, with the waveguiding channel being formed by a core of the optical fibre comprising the photosensitive glass. The optical waveguide may also be a planar waveguide device comprising a layer of the photosensitive glass with a waveguiding channel optically written into the layer. Integrated planar waveguide structures may thus be fabricated by writing a channel network into the photosensitive glass layer.

Inclusion of an oxide of Na, Li or K can be used to increase the solubility of tin in the oxide up to 20 times above the 1 mol% limit of tin in the binary compound SiO₂:SnO₂ thereby allowing larger refractive index modulations to be achieved. In an embodiment of the invention, the glass comprises the oxides SiO₂, SnO₂ and Na₂O. The inclusion of sodium oxide with silica and tin oxide has been shown to produce a photosensitive glass with a highly desirable combination of properties.

A further advantage of inclusion of Na is that the effects related to high volatility of Sn during preform collapse are reduced.

Moreover, refractive index modulations optically written into the SiO₂:SnO₂:Na₂O glass have been shown to have remarkable temperature stability, much superior to conventional SiO₂:GeO₂ glasses. It has been shown that the temperature stability is at least as good as that of the binary photosensitive glass SiO₂:SnO₂. Sodium oxide incorporation can thus be used to increase Sn concentration to increase intrinsic photosensitivity, while simultaneously providing a glass in which optically written refractive index modulations are highly stable.

The introduction of sodium oxide also does not cause any significant change in the background refractive index. This contrasts with other dopants (e.g. Ge or P) which might be suitable for increasing the solubility limit of Sn but which increase the background refractive index of the silicate glass to a much greater degree. For example, in conventional germanosilicate glass the background refractive index increases by about 0.002 per mol% of GeO₂ in SiO₂ (see reference 9). On the other hand, for sodium the increase is about 5 times less, being about 0.0004 per mol% for Na₂O in SiO₂. This is an important advantage for sodium, because, if the refractive index is too high, it is difficult or impossible to manufacture optical fibres or planar waveguides that are compatible with current telecom fibres.

The photosensitive glass preferably comprises between about 1-20 mole % SnO₂ and 1-60 mole % R₂O (where R=Na, K or Li) to lie within the solubility limit in a generally silica matrix. The photosensitive glass may comprise at least one of: 2, 5 or 10 mole % SnO₂ and/or at least one of: 2, 5, 10, 20, 30 or 40 mole % R₂O.

It will also be understood that the combination of tin and Na, Li or K oxides can be applied not only to pure silica glass, but also to silica doped with other elements, e.g. to germanosilicate glass, phosphosilicate glass or aluminosilicate glass, or combinations thereof. Additional rare earth dopants such as Er, Nd or Yb may also be included to provide gain. References to silica glass and a silica matrix are therefore to be construed as covering silica doped with other elements such as germanium, phosphorous or aluminium. Similarly references to a ternary compound are to be construed as inclusive of quaternary and higher order compounds.

The photosensitive glass may be used for many device applications. Specifically, an optical fibre can be provided that has a core made of the photosensitive glass. A planar waveguide comprising the photosensitive glass can also be provided. There can also be provided an optical device having a gain medium comprising the photosensitive glass, for example a laser, optical amplifier or light emitter. To provide gain in the photosensitive glass, suitable dopants such as the rare earth elements Er, Nd, Yb may be included. Moreover, a grating structure may be written into the photosensitive glass, as is described further below in the specific description.

Because of the remarkable stability of refractive index modulations optically written into the glass, devices made of the glass are more robust to intrinsic absorption, multi-photon absorption, high temperatures and other related effects which all tend to erase optically-written refractive index modulations.

Consequently, the glass is especially attractive for applications such as high power lasers and amplifiers where residual absorption effects or multiphoton absorption are typically large and where significant temperature increases may arise during operation. Since the refractive index modulations can withstand such high operating temperatures, devices incorporating the glass can be run hotter and at higher intensities. In this way cooling requirements are less stringent and devices can be run at higher output levels. More generally, the high temperature stability is indicative of a high characteristic activation energy for the photoinduced refractive index changes, which are thought to originate from electron trapping effects. Consequently, even if device operating temperatures are kept low by cooling or pulsed operation, high power devices incorporating a modulated refractive index profile optically written into the glass are expected to demonstrate enhanced stability. For example, device reliability and operating life are expected to be improved.

According to a further aspect of the invention there is provided an optical waveguide device comprising: an optical waveguide formed at least in part of photosensitive silica glass, wherein the photosensitive glass is doped with tin as a photosensitising dopant; and a refractive index variation optically impressed on the photosensitive glass of the optical waveguide; wherein the photosensitive glass is doped additionally with a one of Na, Li or K as a dopant for increasing solubility of tin in the glass.

According to another aspect of the invention there is provided a method of fabricating an optical waveguide, the method comprising: providing a photosensitive silica glass doped with tin as a photosensitising dopant and a one of Na, Li or K as a dopant for increasing solubility of tin in the photosensitive glass; and exposing regions of the photosensitive glass to refractive index change inducing optical radiation, the exposed regions providing a light-guiding core of raised refractive index within the photosensitive glass.

According to a still further aspect of the invention there is provided a process for increasing the sensitivity of silica optical glass to light-induced refractive index variations, the process comprising: doping the optical glass with tin as a photosensitising dopant in combination with a one of Na, Li or K as a further dopant for incorporating increased amounts of tin in the optical glass, thereby to increase the sensitivity of the optical glass to light induced refractive index variation; and exposing regions of the optical glass to varying optical radiation to modulate the refractive index of the optical glass.

### BRIEF DESCRIPTION OF THE DRAWINGS

For a better understanding of the invention and to show how the same may be carried into effect reference is now made by way of example to the accompanying drawings in which:
Figure 1 shows refractive index modulation as a function of exposure time;
Figure 2 shows the initial speed of refractive index modulation growth as a function of UV laser intensity in a glass according to an embodiment of the invention;
Figure 3A shows temperature stability for gratings written in a glass according to an embodiment of the invention, and three further glasses, in terms of degradation of the amplitude of the gratings' refractive index modulation as temperature is increased;
Figure 3B shows temperature stability for the grating according to the embodiment of the invention shown in Figure 3A in terms of reflection response as temperature is increased;
Figure 4 shows solubility limits in the ternary compound SnO₂:SiO₂:R₂O for the examples of R=Li (curve 1), R=Na (curve 2) and R=K (curve 3);
Figure 5 shows a schematic cross-section of an optical fibre with a core of photosensitive glass in which has been written a refractive index modulation;
Figure 6 shows in elevation a planar waveguide structure optically written onto the surface of an epitaxial or bulk layer of photosensitive glass;
Figure 7 shows in elevation a planar waveguide structure optically written into a layer of photosensitive glass sandwiched between a buffer layer and cap layer;
Figure 8 shows an optical fibre laser with Bragg reflector cavity mirrors;
Figure 9 shows a chirped grating; and
Figure 10 shows an optical fibre sensor.

### DETAILED DESCRIPTION

An optical fibre was produced by collapsing a Suprasil (TM) cladding onto a small cylindrical glass core rod while pulling. The core was produced by melting powders of Na₂O, SiO₂ and SnO₂ in a Pt crucible at 1500 °C for 60 minutes. The glass was then consolidated at 1750 °C for 60 minutes. The molar composition of the powder used to produce the glass was: [SiO₂]=75%, [SnO₂]=5%, [Na₂O]=20%. The glass was then cast and drilled with an ultrasonic drill. The cylinder (1.5 mm diameter and 50 mm height) was cleaned in an ultrasonic bath and etched in hydrofluoric acid (HF) to reduce the surface roughness. The refractive index was measured with an Abbe refractometer and found to be n_{Na}=1.52. The cladding (a Suprasil tube with OD=34 mm and ID=1.6 mm) was collapsed onto the core at 2000 °C whilst pulling the fibre. The fibre had OD=74 µm and 2^{nd} mode cut-off at 1495 nm.

A grating for reflectivity at ∼1.55 µm was written in the fibre using a pulsed KrF excimer laser (wavelength 248 nm) working at 30 Hz and a phase mask. Pulse duration and fluence were estimated to be 20 ns and 140 mJ/pulse*cm². The grating length was approximately 2 mm.

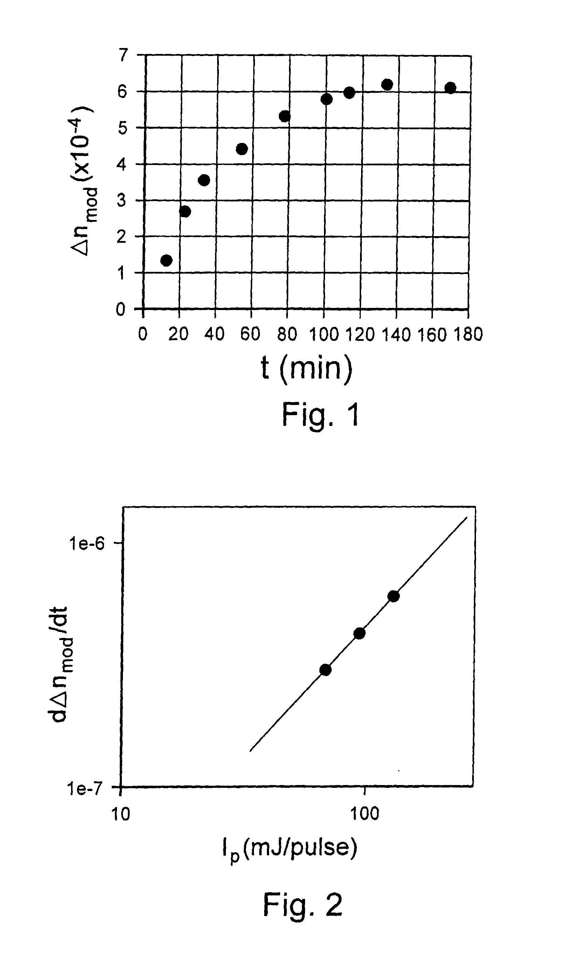

Figure 1 shows the increase of the refractive index modulation with exposure time in minutes. A saturation level is reached at 6.2*10⁻⁴ after 120 minutes exposure. Measurements at different intensities have been performed in order to understand whether the photosensitivity of this sample is driven by a one or two-photon absorption process.

Figure 2 shows the initial growth of the refractive index modulation as a function of laser intensity, which appears linear and has a gradient of 1.1. This is evidence that the photorefractive effect of the glass is based on a one-photon process.

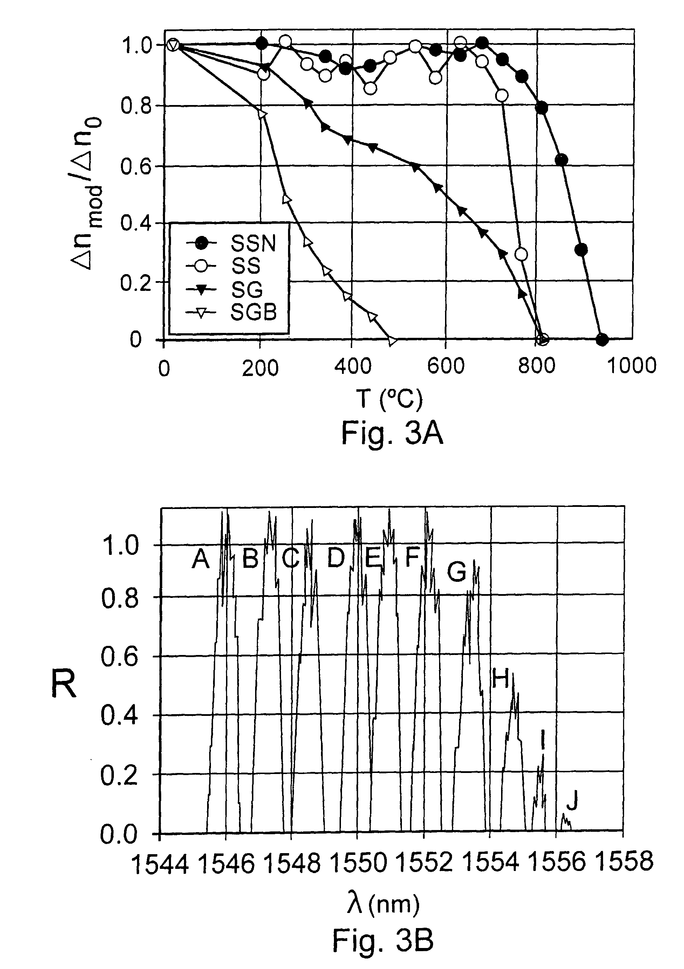

Figure 3A shows the results of temperature stability studies made on gratings written into photosensitive glass of four different composition types. The plot is of the amplitude of the refractive index modulation against temperature in degrees Celsius. The refractive index modulation at the temperature concerned is normalised to the initial refractive index modulation at 20 °C before heating. The refractive index modulation was measured in each case during step heating. The samples were heated first to 205 °C and then to higher temperatures in steps of about 45 °C. Each temperature ramp took about 2 minutes and was followed by keeping the sample at a constant temperature for about 28 minutes, before increasing the temperature again with another step.

The four examples are gratings written in the Na₂O:SnO₂:SiO₂ glass (SSN2 - filled circles), in comparison to gratings written in the SiO₂: SnO₂ glasses of reference [5] (SS - open circles), and those written in germanosilicate glass SiO₂:GeO₂ (SG - filled triangles) and borogermanosilicate glass SiO₂:GeO₂:B₂O₃ (SGB - open triangles). The enhanced stability of the gratings written into SnO₂:SiO₂ and Na₂O:SnO₂:SiO₂ as compared to germanosilicate and borogermanosilicate is striking. (At this point it should be emphasised that the remarkable thermal properties of SnO₂: SiO₂ binary glass is not known from reference [5], and is not believed to have been previously known elsewhere in the literature).

Figure 3B shows the reflection response of the grating written into the Na₂O:SnO₂:SiO₂ glass at various different temperatures, the response curves being measured at points shown in Figure 3A. In order of ascending peak wavelength (left-to-right in the figure), the response curves were taken at: 20 (A) , 205 (B), 343 (C), 484 (D), 580 (E), 681 (F), 767 (G), 852 (H), 895 (I) and 940 °C (J), the peak response wavelength increasing gradually from around 1546 nm. As can be seen, the grating was stable up to and including the 681 °C measurement (response F at 1552 nm), with the first degradation being discernible at 767°C (response G).

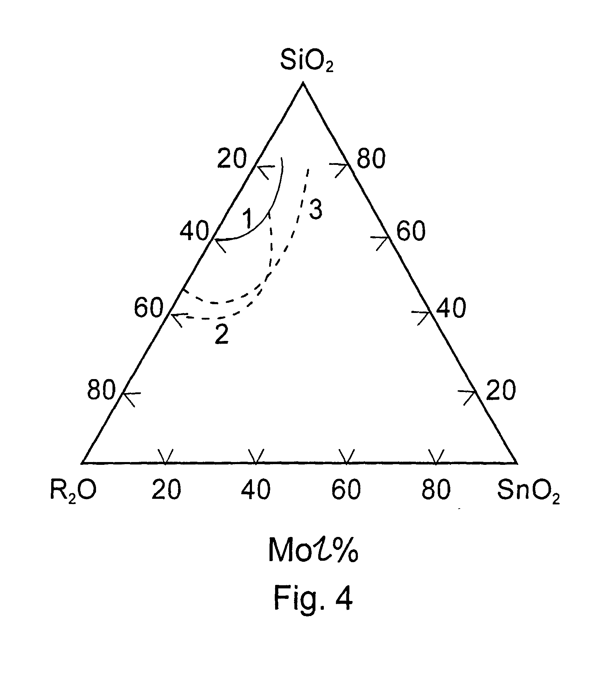

Fig. 4 is taken from reference [10] and shows the relation between the concentrations of the constituents in the ternary compounds SnO₂:SiO₂:R₂O where R is Li (curve 1) Na (curve 2) or K (curve 3). The curves represent the approximate concentration limits for crystallisation. For all three Group I elements, the maximum concentration of SnO₂ for non-crystalline material is shown to be around 20 mol%. Inclusion of the Group I elements thus allows up to 20 times more Sn to be incorporated in a non-crystalline silica matrix. The concentrations which can be achieved for the Group I elements range from minimum values of perhaps around 10 mol% to maximum values of about 40% for Li and 60% for Na and K. For Na a preferred concentration range is between about 10 and 60 mol%. It will be understood that this curves apply only for a pure silica matrix. Different curves will apply if, for example, a gennanosilicate matrix is used.

As described above, grating writing in ternary SiO₂:SnO₂:Na₂O fibre, achieving significant refractive index modulation, has been demonstrated.

From measurements of absorption on Sn doped/co-doped silica, it is expected that in the ternary SiO₂:SnO₂:Na₂O glass the absorption peak at around 250 nm will be situated at longer wavelengths compared to germanosilicate based glass. This could be useful for grating writing through a coating on an optical fibre (as the coatings are typically more transparent at longer UV wavelengths) and for using commercial laser sources (solid-state based) both via one-photon and two-photons processes.

In the above embodiments, the fibre is produced using rod-in-tube techniques, rather than MCVD as in previous work. It is thought this may be helpful for achieving high Sn concentrations. However, MCVD remains an option for low loss fibres where Sn solubility is increased by using Na via solution doping.

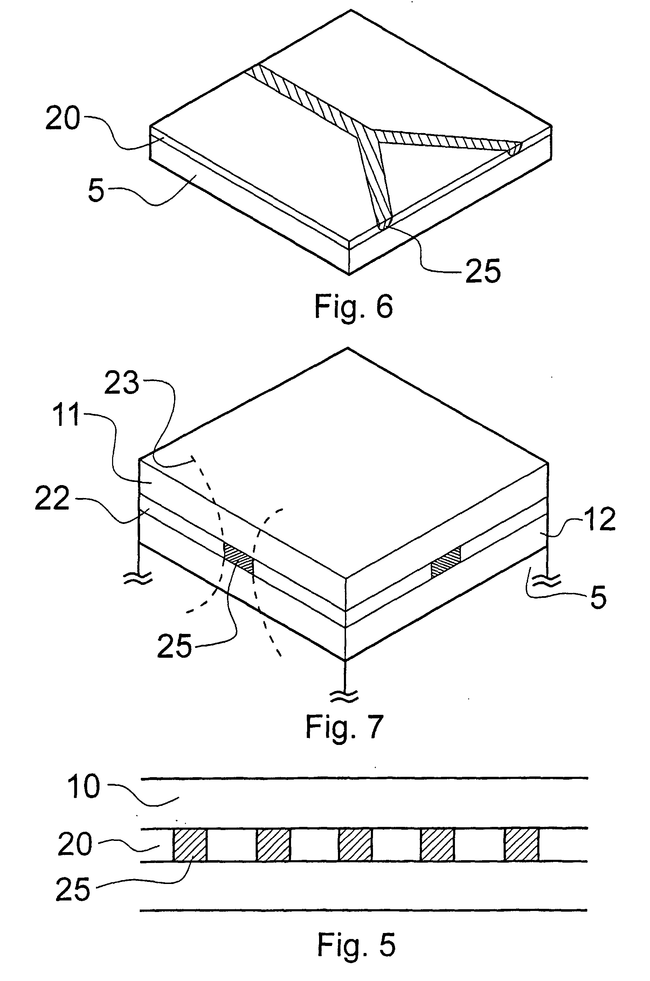

Although the above-described embodiment relates to UV writing of Bragg gratings in optical glass fibres and waveguides, the teachings herein may find general application for production of optical devices based on photosensitive glass where enhanced photorefractivity is required, for example in the definition of channel waveguides by UV writing. Some waveguide structures and devices incorporating such waveguides are now described with reference to Figures 5 to 10.

Figure 5 shows in axial cross-section an optical fibre according to the above-described embodiment. The fibre comprises a core 20 of the photosensitive glass SnO₂:SiO₂:Na₂O in which is optically written a grating structure 25. The core is surrounded by a clad 10.

Figure 6 shows a planar waveguide structure 25 optically written into a layer 20 of the photosensitive glass SnO₂:SiO₂:Na₂O with a writing beam, or lithographically. The photosensitive glass layer 20 is deposited on a silica substrate 5. The waveguiding channel is written into the photosensitive glass layer 20 by focusing a light beam onto the surface of the layer.

Figure 7 shows a buried waveguide structure. A silica buffer layer 12 is deposited on a silicon substrate 5. A layer 22 of the photosensitive glass SnO₂:SiO₂:Na₂O is deposited on the buffer layer 12 with a further silica capping layer 11 being deposited on the photosensitive glass layer 22. A waveguiding channel 25 is written into the photosensitive glass layer 22 by focusing a light beam 23 so that the beam focus or waist is coincident with the layer 22.

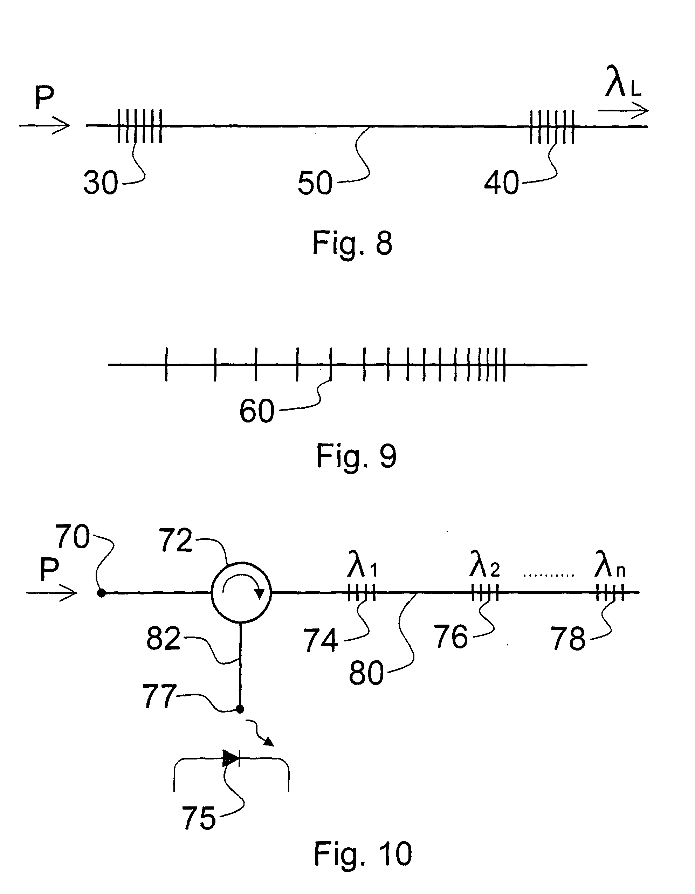

Figure 8 is a schematic drawing of an optical fibre laser. A laser cavity is defined by first and second Bragg gratings 30 and 40 optically written into an optical fibre with a core of the photosensitive glass SnO₂:SiO₂:Na₂O, as described with reference to Figure 5. The gain medium 50 is also made of optical fibre, with the core being doped with Er or another suitable rare earth element such as Nd or Yb. The entire structure may be of a single fibre type, e.g. with a core of Er-doped SnO₂:SiO₂:Na₂O glass. The photosensitive properties of the cavity core can then be utilised to fabricate a DFB (distributed feedback) laser. Alternatively, the Bragg gratings may be written into fibre sections with a core of SnO₂:SiO₂:Na₂O, with a separate fibre section being provided for the cavity. The cavity section will include a gain-inducing dopant such as a rare earth element, but need not include any photosensitising dopants. In operation, a pump beam P is used to excite stimulated emission in the cavity to produce a laser output of wavelength λ_{L}. Figure 9 shows a chirped fibre grating 60 with a core of the photosensitive glass SnO₂:SiO₂:Na₂O, as described with reference to Figure 5. The chirped grating may be used as a dispersion compensator in long-haul fibre communication.

Figure 10 shows an optical fibre sensor. A plurality of Bragg gratings 74, 76, 78 having respective characteristic reflection wavelengths λ₁,λ₂.....λₙ are arranged separated along a section of fibre 80, one end of which is connected to a circulator 72. The fibre comprises a core of the photosensitive glass SnO₂:SiO₂:Na₂O into which the gratings are optically written. The circulator 72 is operable to route a probe light beam P from an input 70 through to the fibre section 80 and to route light reflected from the Bragg gratings to a further section of fibre 82 which leads to an output 77. Light from the output 77 is detected by a photodetector 75 and analysed to determine from which of the Bragg gratings the light was reflected. Spectroscopic or time resolution techniques may be used for the analysis. The device is used as a sensor by placing each of the Bragg gratings at different locations, each of which experiences a different physical environment. Pressure, temperature or strain may for example be measured in this way.

### REFERENCES

1. L. Dong, J.L. Cruz, L. Reekie, M.G. Xu, and D.N. Payne, IEEE Photonics Tech. Lett.7, 1048 (1995).
2. K. Imamura, T. Nakai, Y. Sudo and Y. Imada, Electronics Lett. 34, 1772 (1998).
3. L. Dong, J.L. Cruz, J.A. Tucknott, L. Reekie, and D.N. Payne, Optics Lett. 20, 1982 (1995).
4. WO 96/34304, 'Optical Waveguide Device', by Dong et al..
5. G. Brambilla, V. Pruneri, and L. Reekie, Applied Phys. Lett. 76, 807 (2000).
6. JP 80267676 A, 'Soda lime-silica photosensitive glass and its production'.
7. WO 99/18042, 'Light-induced refractive index changes in low temperature glasses'.
8. US 5,698,262, 'Method for forming tin oxide coating on glass'.
9. Bansal & Doremus "Handbook of Optical Glass Properties" Academic Press 1986 ISBN 0-12-078140-9 pages 163, 583 & 584
10. O.V. Mazurin, M.V. Streltsina, T.P. Shvaiko-Shvaikovskaya, "Handbook of Glass Data Part C Ternary Silicate Glasses", Elsevier, 1985 - ISBN 0 -444-42889-5 pages 581, 585, 592, 593 & 601.

## Claims

1. An optical waveguide having a waveguiding channel of photosensitive silica glass with a modified refractive index optically written therein, **characterised in that** the photosensitive glass comprises oxides of silicon, tin and at least one of sodium, lithium or potassium.

2. An optical fibre waveguide having a core of photosensitive silica glass with a modulated refractive index profile optically written therein, **characterised in that** the photosensitive glass of the core comprises oxides of silicon, tin and at least one of sodium, lithium or potassium.

3. A planar waveguide having a layer of photosensitive silica glass, the layer having at least one waveguiding channel of modified refractive index optically written therein, **characterised in that** the photosensitive glass of the layer comprises oxides of silicon, tin and at least one of sodium, lithium or potassium.

4. A waveguide according to claim 3, wherein the photosensitive glass layer is buried under a capping layer.

5. A waveguide according to any one of claims 1 to 4, wherein the photosensitive glass comprises at least 2 mole % SnO₂.

6. A waveguide according to any one of claims 1 to 4, wherein the photosensitive glass comprises at least 5 mole % SnO₂.

7. A waveguide according to any one of claims 1 to 4, wherein the photosensitive glass comprises at least 10 mole % SnO₂.

8. A waveguide according to any one of the preceding claims, wherein the photosensitive glass comprises SiO₂, SnO₂ and R₂O where R is the at least one of sodium, lithium or potassium.

9. A waveguide according to claim 8, wherein the photosensitive glass comprises at least 2 mole % R₂O.

10. A waveguide according to claim 8, wherein the photosensitive glass comprises at least 5 mole % R₂O.

11. A waveguide according to claim 8, wherein the photosensitive glass comprises at least 10 mole % R₂O.

12. A waveguide according to claim 8, wherein the photosensitive glass comprises at least 20 mole % R₂O.

13. A waveguide according to claim 8, wherein the photosensitive glass comprises at least 30 mole % R₂O.

14. A waveguide according to claim 8, wherein the photosensitive glass comprises at least 40 mole % R₂O.

15. A waveguide according to claim 8, wherein the photosensitive glass comprises between about 1-20 mole % SnO₂ and 1-60 mole % R₂O.

16. A waveguide according to any one of the preceding claims, doped to provide a gain region.

17. A waveguide according to claim 16, wherein the gain region comprises a rare earth dopant.

18. A waveguide according to claim 17, wherein the rare earth dopant is at least one of Er, Nd and Yb.

19. A laser comprising a waveguide according to claim 18.

20. A laser according to claim 19, further comprising a pair of Bragg reflectors optically written into the photosensitive glass bounding at least a part of the gain region.

21. A laser according to claim 19, further comprising a pair of Bragg reflectors optically written into a further photosensitive glass bounding the gain region.

22. A grating comprising a waveguide according to any one of claims 1 to 18, the grating being defined by a modulated refractive index profile optically written into the photosensitive glass.

23. A dispersion compensator comprising a grating according to claim 22, the grating being a chirped grating.

24. A Bragg reflector comprising a grating according to claim 22.

25. A sensor comprising a plurality of Bragg reflectors according to claim 24 distributed along the waveguide, each Bragg reflector having a characteristic reflection response.

26. An optical waveguide device comprising:
an optical waveguide formed at least in part of photosensitive silica glass, wherein the photosensitive glass is doped with tin as a photosensitising dopant; and
a refractive index variation optically impressed on the photosensitive glass of the optical waveguide;
wherein the photosensitive glass is doped additionally with a one of sodium, lithium or potassium as a dopant for increasing solubility of tin in the glass.

27. A method of fabricating an optical waveguide, the method comprising:
providing a photosensitive silica glass doped with tin as a photosensitising dopant and a one of sodium, lithium or potassium as a dopant for increasing solubility of tin in the photosensitive glass; and
exposing regions of the photosensitive glass to refractive index change inducing optical radiation, the exposed regions providing a light-guiding core of raised refractive index within the photosensitive glass.

28. A process for increasing the sensitivity of silica optical glass to light-induced refractive index variations, the process comprising:
doping the optical glass with tin as a photosensitising dopant in combination with a one of sodium, lithium or potassium as a further dopant for incorporating increased amounts of tin in the optical glass, thereby to increase the sensitivity of the optical glass to light induced refractive index variation; and
exposing regions of the optical glass to varying optical radiation to modulate the refractive index of the optical glass.

## Patentansprüche

1. Optischer Wellenleiter mit einem wellenleitenden Kanal aus lichtempfindlichem Quarzglas mit einem modifizierten Brechungsindex, der optisch darin einbeschrieben ist, **dadurch gekennzeichnet, daß** das lichtempfindliche Glas Oxide von Silicium, Zinn und zumindest einem der Elemente Natrium, Lithium oder Kalium aufweist.

2. Optischer Faserwellenleiter mit einem Kern aus lichtempfindlichem Quarzglas mit einem modulierten Brechungsindexprofil, das optisch einbeschrieben ist, **dadurch gekennzeichnet, daß** das lichtempfindliche Glas des Kerns Oxide von Silicium, Zinn und zumindest einem der Elemente Natrium, Lithium oder Kalium aufweist.

3. Ebener Wellenleiter mit einer Schicht aus lichtempfindlichem Quarzglas, wobei die Schicht zumindest einen wellenleitenden Kanal mit modifiziertem Brechungsindex, der optisch darin einbeschrieben ist, hat, **dadurch gekennzeichnet, daß** das lichtempfindliche Glas der Schicht Oxide von Silicium, Zinn und zumindest einem der Elemente Natrium, Lithium oder Kalium aufweist.

4. Wellenleiter nach Anspruch 3, bei dem die lichtempfindliche Glasschicht unter einer Deckschicht vergraben ist.

5. Wellenleiter nach einem der Ansprüche 1 bis 4, wobei das lichtempfindliche Glas zumindest 2 Mol-% SnO₂ aufweist.

6. Wellenleiter nach einem der Ansprüche 1 bis 4, wobei das lichtempfindliche Glas zumindest 5 Mol-% SnO₂ aufweist.

7. Wellenleiter nach einem der Ansprüche 1 bis 4, wobei das lichtempfindliche Glas zumindest 10 Mol-% SnO₂ aufweist.

8. Wellenleiter nach einem der vorherigen Ansprüche, wobei das lichtempfindliche Glas SiO₂, SnO₂ und R₂O aufweist, wobei R zumindest eines der Elemente Natrium, Lithium oder Kalium ist.

9. Wellenleiter nach Anspruch 8, bei dem das lichtempfindliche Glas zumindest 2 Mol-% R₂O aufweist.

10. Wellenleiter nach Anspruch 8, bei dem das lichtempfindliche Glas zumindest 5 Mol-% R₂O aufweist.

11. Wellenleiter nach Anspruch 8, bei dem das lichtempfindliche Glas zumindest 10 Mol-% R₂O aufweist.

12. Wellenleiter nach Anspruch 8, bei dem das lichtempfindliche Glas zumindest 20 Mol-% R₂O aufweist.

13. Wellenleiter nach Anspruch 8, bei dem das lichtempfindliche Glas zumindest 30 Mol-% R₂O aufweist.

14. Wellenleiter nach Anspruch 8, bei dem das lichtempfindliche Glas zumindest 50 Mol-% R₂O aufweist.

15. Wellenleiter nach Anspruch 8, wobei das lichtempfindliche Glas zwischen etwa 1-20 Mol-% SnO₂ und 1-60 Mol-% R₂O aufweist.

16. Wellenleiter nach einem der vorherigen Ansprüche, der dotiert ist, um einen Verstärkungsbereich bereitzustellen.

17. Wellenleiter nach Anspruch 16, wobei der Verstärkungsbereich einen Seltenerddotierstoff aufweist.

18. Wellenleiter nach Anspruch 17, wobei der Seltenerddotierstoff zumindest eines der Elemente Er, Nd und Yb ist.

19. Laser, der einen Wellenleiter nach Anspruch 18 aufweist.

20. Laser nach Anspruch 19, der weiterhin ein Paar Bragg-Reflektoren aufweist, die optisch in das lichtempfindliche Glas einbeschrieben sind, die zumindest einen Teil der Verstärkungsregion begrenzen.

21. Laser nach Anspruch 19, der weiterhin ein Paar von Bragg-Reflektoren aufweist, die in ein weiteres lichtempfindliches Glas, das die Verstärkungsregion umgrenzt, einbeschrieben sind.

22. Gitter, das einen Wellenleiter gemäß einem der Ansprüche 1 bis 18 aufweist, wobei das Gitter festgelegt wird durch ein moduliertes Brechungsindexprofil, das optisch in das lichtempfindliche Glas eingeschrieben ist.

23. Dispersionskompensator, der ein Gitter nach Anspruch 22 aufweist, wobei das Gitter ein gechirptes Gitter ist.

24. Bragg-Reflektor, der ein Gitter nach Anspruch 22 aufweist.

25. Sensor, der eine Mehrzahl von Bragg-Reflektoren nach Anspruch 24 aufweist, die entlang des Wellenleiters verteilt sind, wobei jeder Bragg-Reflektor eine charakteristische Reflexionsantwort hat.

26. Optische Wellenleitereinrichtung, die aufweist:
einen optischen Wellenleiter, der zumindest teilweise aus lichtempfindlichem Quarzglas gebildet ist, wobei das lichtempfindliche Glas mit Zinn als lichtempfindlichem Dotierstoff dotiert ist, und
eine Brechungsindexvariation, die optisch dem lichtempfindlichen Glas des optischen Wellenleiters aufgeprägt ist,
wobei das lichtempfindliche Glas zusätzlich mit einem der Elemente Natrium, Lithium oder Kalium als Dotierstoff dotiert ist für die erhöhte Löslichkeit von Zinn in dem Glas.

27. Verfahren zur Herstellung eines optischen Wellenleiters, wobei das Verfahren aufweist:
Bereitstellen eines lichtempfindlichen Quarzglases, das mit Zinn dotiert ist, als lichtempfindlichem Dotierstoff und einem der Elemente Natrium, Lithium oder Kalium als Dotierstoff dotiert ist für das Erhöhen der Löslichkeit von Zinn in dem lichtempfindlichen Glas, und
Aussetzen von Bereichen des lichtempfindlichen Glases einer optischen Strahlung, die eine Brechungsindexveränderung induziert, wobei die bestrahlten Bereiche einen lichtführenden Kern von erhöhtem Brechungsindex innerhalb des lichtempfindlichen Glases bereitstellen.

28. Verfahren für das Erhöhen der Empfindlichkeit des optischen Quarzglases gegenüber lichtinduzierten Brechungsindexvariationen, wobei das Verfahren aufweist:
Dotieren des optischen Glases mit Zinn als lichtempfindlichem Dotierstoff in Kombination mit einem der Elemente Natrium, Lithium oder Kalium als einem weiteren Dotierstoff für das Inkorporieren erhöhter Zinnmengen in dem optischen Glas, wodurch die Empfindlichkeit des optischen Glases gegenüber lichtinduzierten Brechungsindexveränderungen erhöht wird, und
Aussetzen von Bereichen des optischen Glases mit variierender optischer Strahlung, um den Brechungsindex des optischen Glases zu modulieren.

## Revendications

1. Guide d'onde optique ayant un canal de guidage d'onde en verre de silice photosensible présentant un indice de réfraction modifié recevant une écriture optique, **caractérisé en ce que** le verre photosensible comprend des oxydes de silicium, d'étain et d'au moins l'un du sodium, du lithium ou du potassium.

2. Guide d'onde à fibre optique ayant un coeur en verre de silice photosensible présentant un profil d'indice de réfraction modulée recevant une écriture optique, **caractérisé en ce que** le verre photosensible du coeur comprend des oxydes de silicium, d'étain et d'au moins l'un du sodium, du lithium ou du potassium.

3. Guide d'onde plan ayant une couche de verre de silice photosensible, la couche ayant au moins un canal de guidage d'onde à indice de réfraction modifié recevant une écriture optique, **caractérisé en ce que** le verre photosensible de la couche comprend des oxydes de silicium, d'étain et d'au moins l'un du sodium, du lithium ou du potassium.

4. Guide d'onde selon la revendication 3, dans lequel la couche de verre photosensible est enterrée sous une couche de revêtement.

5. Guide d'onde selon l'une quelconque des revendications 1 à 4, dans lequel le verre photosensible comprend au moins 2 % en moles de SnO₂.

6. Guide d'onde selon l'une quelconque des revendications 1 à 4, dans lequel le verre photosensible comprend au moins 5 % en moles de SnO₂.

7. Guide d'onde selon l'une quelconque des revendications 1 à 4, dans lequel le verre photosensible comprend au moins 10 % en moles de SnO₂.

8. Guide d'onde selon l'une quelconque des revendications précédentes, dans lequel le verre photosensible comprend du SiO₂, du SnO₂ et du R₂O où R est le, au moins un, du sodium, du lithium ou du potassium.

9. Guide d'onde selon la revendication 8, dans lequel le verre photosensible comprend au moins 2 % en moles de R₂O.

10. Guide d'onde selon la revendication 8, dans lequel le verre photosensible comprend au moins 5 % en moles de R₂O.

11. Guide d'onde selon la revendication 8, dans lequel le verre photosensible comprend au moins 10 % en moles de R₂O.

12. Guide d'onde selon la revendication 8, dans lequel le verre photosensible comprend au moins 20 % en moles de R₂O.

13. Guide d'onde selon la revendication 8, dans lequel le verre photosensible comprend au moins 30 % en moles de R₂O.

14. Guide d'onde selon la revendication 8, dans lequel le verre photosensible comprend au moins 40 % en moles de R₂O.

15. Guide d'onde selon la revendication 8, dans lequel le verre photosensible comprend entre environ 1 à 20 % en moles de SnO₂ et 1 à 60 % en moles de R₂O.

16. Guide d'onde selon l'une quelconque des revendications précédentes, dopé pour présenter une région à gain.

17. Guide d'onde selon la revendication 16, dans lequel la région à gain comprend un dopant à terre rare.

18. Guide d'onde selon la revendication 17, dans lequel le dopant à terre rare est au moins l'un de Er, Nd et Yb.

19. Laser comportant un guide d'onde selon la revendication 18.

20. Laser selon la revendication 19, comportant en outre une paire de réflecteurs de Bragg inscrits optiquement dans le verre photosensible délimitant au moins une partie de la région à gain.

21. Laser selon la revendication 19, comportant en outre une paire de réflecteurs de Bragg inscrits optiquement dans un autre verre photosensible délimitant la région à gain.

22. Réseau comportant un guide d'onde selon l'une quelconque des revendications 1 à 18, le réseau étant défini par un profil d'indice de réfraction modulé recevant une inscription optique dans le verre photosensible.

23. Compensateur de dispersion comportant un réseau selon la revendication 22, le réseau étant un réseau à fluctuation de fréquence.

24. Réflecteur de Bragg comportant un réseau selon la revendication 22.

25. Capteur comportant plusieurs réflecteurs de Bragg selon la revendication 24, distribués le long du guide d'onde, chaque réflecteur de Bragg ayant une réponse en réflexion caractéristique.

26. Dispositif à guide d'onde optique comportant :
un guide d'onde optique formé au moins en partie de verre de silice photosensible, dans lequel le verre photosensible est dopé avec de l'étain en tant que dopant de photosensibilisation ; et
une variation d'indice de réfraction imprimée optiquement sur le verre photosensible du guide d'onde optique ;
dans lequel le verre photosensible est dopé en outre avec l'un du sodium, du lithium ou du potassium en tant que dopant pour augmenter la solubilité de l'étain dans le verre.

27. Procédé de fabrication d'un guide d'onde optique, le procédé comprenant :
l'utilisation d'un verre de silice photosensible dopé avec de l'étain en tant que dopant de photosensibilisation et l'un du sodium, du lithium ou du potassium en tant que dopant pour augmenter la solubilité de l'étain dans le verre photosensible ; et
l'exposition de régions du verre photosensible à un rayonnement optique entraînant une variation de l'indice de réfraction, les régions exposées constituant un coeur de guidage de lumière d'indice de réfraction augmenté dans le verre photosensible.

28. Procédé pour augmenter la sensibilité de verres optiques de silice à des variations d'indice de réfraction engendrées par la lumière, le procédé comprenant :
le dopage du verre optique avec de l'étain en tant que dopant de photosensibilisation en combinaison avec l'un du sodium, du lithium ou du potassium constituant un autre dopant pour l'incorporation de quantités accrues d'étain dans le verre optique, augmentant ainsi la sensibilité du verre optique à une variation d'indice de réfraction engendrée par la lumière ; et
l'exposition de régions du verre optique pour faire varier un rayonnement optique afin de moduler l'indice de réfraction du verre optique.
